# EUROPEAN PATENT APPLICATION

(11) **EP 2 501 110 A2**
(43) Date of publication of application: **19.09.2012**
(21) Application number: 12159988.0
(22) Date of filing: 16.03.2012
(51) Int. Cl.: H04L 29/08

(54) **Method and apparatus pertaining to pushing content via a push proxy gateway**

(30) Priority: 18.03.2011 US 201113051281
(71) Applicant: Research In Motion Limited, Waterloo, ON N2L 3W8 (CA)
(72) Inventor: Basavanahally, Srikanth SrinivasMurthy, Sunrise, FL Florida 33323 (US); Bhuta, Mahesh Babubhai, Coral Springs, FL Florida 33071 (US); Arora, Rakesh Kumar, Mississauga, Ontario L4W 0B5 (CA); D'Andrea, Matthew Rogers, Mississauga, Ontario L4W 0B5 (CA); Di Cesare, Marco, Mississauga, Ontario L4W 0B5 (CA); Iyer, Kannan Narayanan, Fremont, CA California 94538 (US)
(74) Representative: Greenaway, Martin William

(57) **Abstract**

A network element accepts push registrations from each of a plurality of communication devices. These push registrations can include a pushed-content address and identification of a push proxy gateway type to use when pushing the content to the communication device. Upon receiving content from a push application to push to a given communication device along with the device's address, the network element can use that address to identify the push proxy gateway type to use when forwarding the content via a push proxy gateway to the intended recipient device.

## Description

### Technical Field

This disclosed concept relates generally to pushing content to a communication device and more particularly to pushing content via a push proxy gateway.

### Background

Generally speaking, there are two primary ways to deliver content to a recipient device via an intervening network (or networks). By one approach the recipient device proactively requests the content, at a time of need, using a so-called pull methodology. By the other approach some service or source takes the independent initiative to forward the content to the recipient device using a so-called push methodology.

In many application settings a push proxy gateway serves as a necessary intermediary network element to facilitate pushing content from a server-side push application to the recipient device. There are, however, more than one type of push proxy gateway. These types include, for example, the enterprise server (i.e., a push proxy gateway that is hosted by an enterprise (such as a manufacturer of goods, a transport company, a provider of legal services, and so forth) behind their firewall) as well as the Internet server (i.e., a push proxy gateway that is hosted by a primary service provider). A typical prior art approach in these regards requires the server-side application that seeks to push content to a given recipient device to know which type of push proxy gateway to employ for a given recipient device. In some cases this becomes further complicated in that the particular type of push proxy gateway to employ for a given recipient device can vary depending upon the particular recipient device push-friendly application itself.

At present, many networks meet this need by having each server-side push-based application maintain a map of its subscriber's addresses and the transport type (i.e., the push proxy gateway type) to be used when pushing content to each particular subscriber device (and/or subscriber-device application, as the case may be). Such an approach, however, imposes information synchronization challenges and can burden a network with considerable supporting traffic in these regards.

### Brief Description of the Drawings

FIG. 1 comprises a flow diagram as configured in accordance with various embodiments of the disclosed concept;

FIG. 2 comprises a block diagram as configured in accordance with various embodiments of the disclosed concept;

FIG. 3 comprises a flow diagram as configured in accordance with various embodiments of the disclosed concept;

FIG. 4 comprises a block diagram as configured in accordance with various embodiments of the disclosed concept;

FIG. 5 comprises a block diagram as configured in accordance with various embodiments of the disclosed concept; and

FIG. 6 comprises a signal flow diagram as configured in accordance with various embodiments of the disclosed concept.

Elements in the figures are illustrated for simplicity and clarity and have not necessarily been drawn to scale. For example, the dimensions, relative positioning, or both of some of the elements in the figures may be exaggerated relative to other elements to help to improve understanding of various embodiments of the present disclosed concept. Also, common but well-understood elements that are useful or necessary in a commercially feasible embodiment are often not depicted in order to facilitate a less obstructed view of these various embodiments of the present disclosed concept. Certain actions or steps may be described or depicted in a particular order of occurrence while those skilled in the art will understand that such specificity with respect to sequence is not actually required. The terms and expressions used herein have the ordinary technical meaning as is accorded to such terms and expressions by persons skilled in the technical field as set forth above except where different specific meanings have otherwise been set forth herein.

### Detailed Description

Generally speaking, pursuant to these various embodiments, a network element, such as a server-side library, is configured to accept push registrations from each of a plurality of communication devices. These push registrations can each include at least an address for receiving pushed content and a categorical identification of a push proxy gateway type to use when pushing the content to the communication. In a typical application setting this network element then stores these push registrations for future use.

The network element, upon then receiving content to push to a given one of the plurality of communication devices from a push application, along with an address for that communication device, can use that address to identify the push proxy gateway type that corresponds to the push application to thereby provide an identified push proxy gateway type. The network element can then use this information to forward the content to the identified push proxy gateway type to thereby facilitate pushing the content to the intended recipient device.

These teachings will also accommodate having a platform such as a communication device respond to the detection of a predetermined event (such as powering up) by registering pushed-content service information with the aforementioned network element. By one approach this pushed-content service information can include identifying information such as, but not limited to, an email address, a device personal identification number, and so forth. This pushed-content service information can also comprise the aforementioned categorical identification of the push proxy gateway type to use when pushing content to the communication device (either on a device basis or on an application-by-application basis as desired).

These teachings relieve a push-application server from the burden of maintaining an accurate, complete, and current record of which push proxy gateway type to employ when pushing content to a given subscriber's platform (or subscriber's application). These teachings can also serve to lighten traffic burdens on the network by potentially reducing the number of informational exchanges that are required to ensure currency of information across a large number of pushed-content subscribers and pushed-content servers.

These teachings can be readily deployed in an economical manner and can serve to leverage the utility and service of legacy infrastructure. These teachings are also highly scalable and can provide satisfactory service over a wide range of devices, applications, network architectures, bearer mediums, gateway types, and the like.

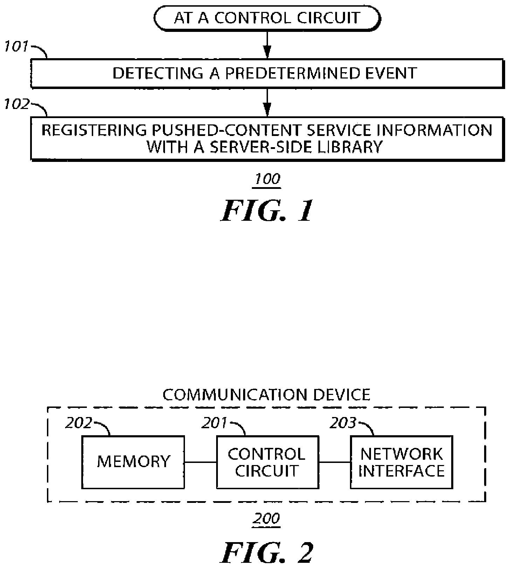

These and other benefits may become clearer upon making a thorough review and study of the following detailed description. Referring now to the drawings, and in particular to FIG. 1, an illustrative process 100 that is compatible with many of these teachings will now be presented. For the purposes of this example it will be presumed that a control circuit as comprises a part of an end-user device such as a communication device carries out this process 100.

Pursuant to this process 100 the control circuit detects 101 a predetermined event of choice. By one approach, this predetermined event can comprise, for example, powering up of the control circuit 101. This might comprise powering up from a complete loss of power (as can occur, for example, when the communication device's battery has been removed or when a user sets the on/off switch to "off') or, if desired, might comprise powering up from a reduced state of power consumption (as occurs when, for example, the control circuit sleeps).

In response to detecting this predetermined event, the control circuit responsively registers 102 pushed-content service information with a server-side library. (Those skilled in the relevant art will understand a "library" to refer to a software artifact that encompasses a set of rich functionality.)

By one approach this pushed-content service information can comprise, at least in part, identifying information as pertains to the control circuit. An email address can comprise one potentially useful example in these regards. A device personal identification number (PIN) comprises another potentially useful example, depending upon the application setting. In addition, these teachings will accommodate any of a wide variety of identifiers as desired.

By one approach, in lieu of the foregoing or in combination therewith as desired, this pushed-content service information can comprise, at least in part, a categorical identification of a push proxy gateway type to use when pushing content to the platform that includes the control circuit. (Push proxy gateways are generally known in the art and hence, for the sake of brevity, further elaboration in these regards will not be provided here.) For the sake of example but without intending any particular limitations in these regards, this can comprise identifying whether an enterprise-type push proxy gateway should be employed when pushing content or whether, say, an Internet-type push proxy gateway should be employed instead.

This categorical identification of push proxy gateway by type may, or may not, also accompany identification of a specific push proxy gateway as desired. In any event, this categorical identification can be provided as being generally applicable to the device that includes the control circuit. These teachings will also accommodate, however, providing this categorical identification on an application-by-application basis. In this case, a plurality of different types of push proxy gateways may be identified as being appropriate for use when pushing content to a given device such as a communication device, with the specific type to employ in a given instance depending upon the particular application that serves to receive (or process or present) the pushed content.

The above-described process 100 can be readily enabled using any of a wide variety of available, readily-configured platforms, including partially or wholly programmable platforms as are known in the art or dedicated purpose platforms as may be desired for some applications. Referring now to FIG. 2, an illustrative approach (and non-limiting approach) to such a platform will now be provided. In this example, the platform comprises a communication device 200 of choice (such as a wireless two-way mobile device such as, but not limited to, a modern smart phone, a pad/tablet-based device, a laptop, and so forth).

This illustrative communication device 200 includes a control circuit 201 that operably couples to a memory 202 and a network interface 203 (such as a wireless network interface). The memory can serve to store, for example, some or all of the aforementioned identifying information, The control circuit 201 can comprise a fixed-purpose hard-wired platform or can comprise a partially or wholly programmable platform. All of these architectural options are well known and understood in the art and require no further description here.

When the control circuit 201 comprises an at least partially programmable platform the aforementioned memory 202 can also comprise a non-transitory computer-readable media that serves to store the executable code to permit the control circuit 201 to carry out the desired functionality. In any event, the control circuit 201 can be configured (for example, via appropriate programming) to carry out one or more of the actions and functionality set forth herein. This can include, by way of example, detecting the aforementioned predetermined event and responding to that detecting by registering the aforementioned pushed-content service information with a server-side library.

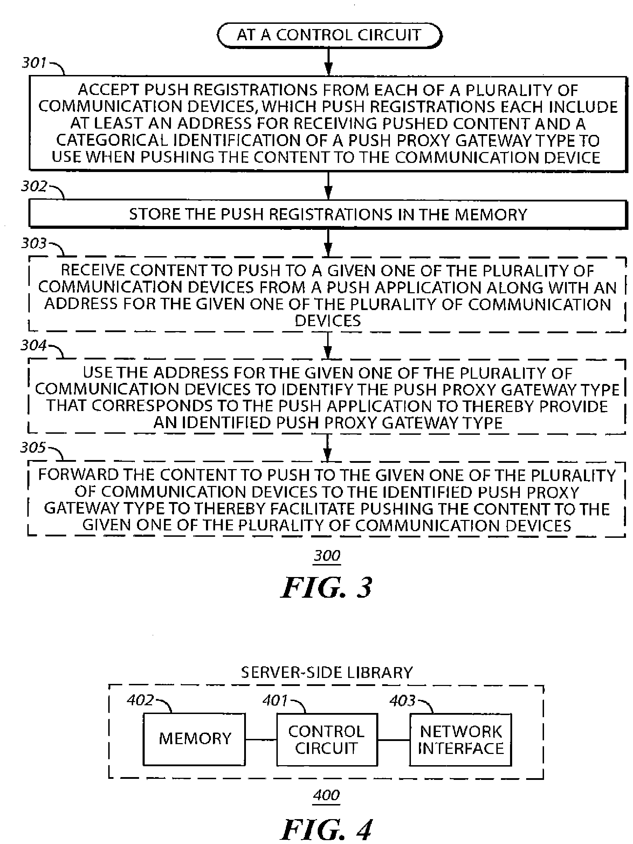

Referring now to FIG. 3, a corresponding process 300 that can be carried out by, for example, a control circuit as comprises a part of the aforementioned server-side library will be presented for the sake of illustration but without intending any particular limitations in these regards.

Pursuant to this process 300 the control circuit accepts 301 push registrations from each of a plurality of communication devices. As described above, these push registrations can each include at least an address (such as one or more email addresses, device PIN's, and so forth) for receiving pushed content and a categorical identification of a push proxy gateway type to use when pushing the content to the communication device. This can comprise, by way of illustration, identifying an enterprise server type or an Internet server type.

Also as described above, this can comprise accepting registrations from a single device that presents a plurality of categorical identifications of push proxy gateway types where those identifications correspond to different applications at the communication device. So configured, a given communication device can utilize differing categories of push proxy gateway types depending upon the particular application that facilitates pushing the content.

The control circuit can then store 302 these push registrations in a corresponding memory to facilitate subsequent use of that information. By one approach this can comprise locally storing this information using a memory that shares, for example, a same power supply, chassis, housing or the like with the control circuit. By another approach (in lieu of the foregoing or in combination therewith) this could comprise remotely storing this information using a physically remote memory that couples to the control circuit via an intervening network but which does not share a common power supply, chassis, housing or the like with the control circuit.

So configured, the server-side library can now optionally leverage the availability of the aforementioned information to facilitate pushing content to registered devices if desired. With continued reference to FIG. 3, optional support in this regard can comprise receiving 303 content to push to a given one of the aforementioned plurality of communication devices from a push application along with an address for this particular communication device. This content can of course assume any of a wide variety of data formats and can include textual content, still image content, video content, audio content, and so forth as desired. The present teachings are generally applicable to all pushable content.

The control circuit can use 304 the proffered address to identify the push proxy gateway type that corresponds to this push application. This identified push proxy gateway type can then be used to forward 305 the received content to a push proxy gateway of the correct, designated type. That push proxy gateway can then forward the content on to the addressed communication device.

The above-described process 300 can also be readily enabled using any of a wide variety of available, readily-configured platforms, including partially or wholly programmable platforms as are known in the art or dedicated purpose platforms as may be desired for some applications. Referring now to FIG. 4, an illustrative approach (and non-limiting approach) to such a platform will now be provided. In this example, the platform comprises a server-side library 400 of choice.

This illustrative server-side library 400 includes a control circuit 401 that operably couples to a memory 402 and a network interface 403. The memory can serve to store, for example, one or more tables or other storage paradigms that correlate the aforementioned registered identifying information with corresponding categorical identifications of particular push proxy gateway types. The control circuit 401 can again comprise a fixed-purpose hard-wired platform or can comprise a partially or wholly programmable platform.

And again, when the control circuit 401 comprises an at least partially programmable platform the aforementioned memory 402 can also serve to store the executable code to permit the control circuit 401 to carry out the desired functionality. In any event, the control circuit 401 can be configured (for example, via appropriate programming) to carry out one or more of the actions and functionality set forth herein.

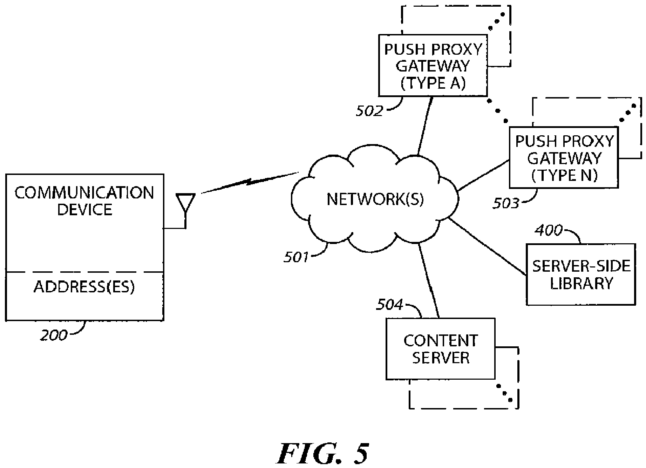

FIG. 5 provides an illustrative system-wide overview in these general regards. In this example a wireless communication device 200 can register with a server-side library 400 as per these teachings via one or more intervening networks 501. The architecture of such networks, and the manners by which such components can compatibly communicate with one another, comprise a well-understood area of endeavor. As the present teachings are not particularly sensitive to any particular choices in these regards, further elaboration will not be provided here.

For the sake of example this illustration depicts two different types of push proxy gateways as being available; a type A push proxy gateway 502 and a type N push proxy gateway 503. Pursuant to these teachings the communications device 200 can register its preference (or requirement) that either a type A or type N push proxy gateway be used when pushing content to the communications device 200 (either in general or on an application-by-application basis as desired).

So configured, a content server 504 having content to push to the communication device 200 can forward that content, along with the corresponding recipient address, to the service-side library 400 (via, for example, the network 501 as appropriate). The server-side library 400, in turn, can determine the push proxy gateway type to employ when pushing this content to this communication device 200 by employing that proffered address as described above. The server-side library 400 can then forward that content along with the address to a push proxy gateway of the identified type and the latter can then push that content to the communication device 200 to complete the push.

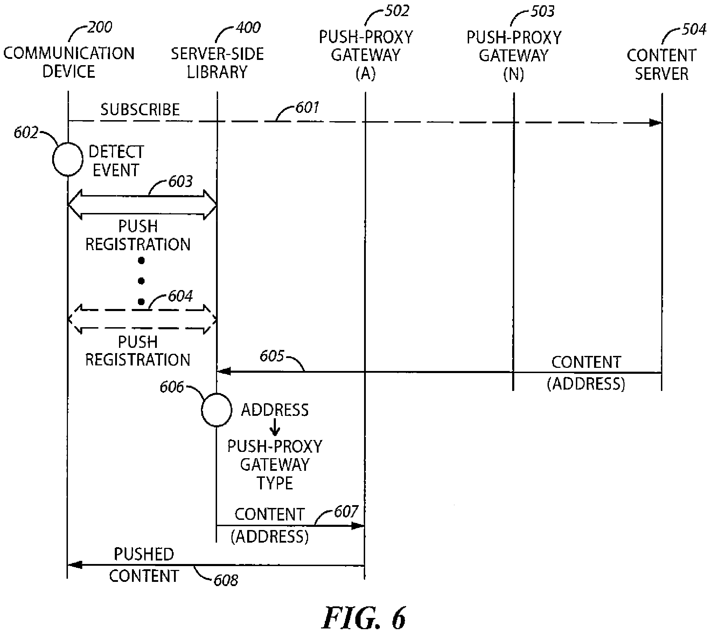

FIG. 6 provides a further illustrative example in these same regards. Here, following when the communication device 200 subscribes 601 to a content server 504 to receive pushed content, the communication device 200 detects 602 an event of interest as described above and responds by conducting a push registration 603 with the server-side library 400. It is during this push registration that the communication device 200 provides both its address (to be used when receiving the pushed content) and its preference or requirements regarding which type of push proxy gateway to be used when pushing the desired content.

As alluded to above the communication device 200 may register to receive pushed content from more than one content server or application. By one approach a single registration session 603 can serve to include a corresponding plurality of registrations in these regards. If desired, however, these teachings will accommodate using a plurality of push registration sessions 604 to accommodate such a situation.

Later, the content server 504 provides to the server-side library 400 content 605 to be pushed to the communication device 200 along with the address for the intended recipient of the pushed content. The server-side library 400 uses the address to look-up or otherwise determine 606 the push proxy gateway type to be used when pushing the content to the communication device 200. Assuming in this example that the communication device 200 had designated a type A push proxy gateway in such circumstances, the server-side library 400 now forwards the content along with the recipient's address 607 to a type A push proxy gateway 502. The latter than pushes the content 608 to the communication device 200 using that address.

So configured, content can be reliably and efficiently pushed to a subscriber without requiring that each and every push server maintain specific information regarding which type of push proxy gateway is to be utilized when pushing content to a given subscriber.

Those skilled in the art will recognize that a wide variety of modifications, alterations, and combinations can be made with respect to the above described embodiments without departing from the spirit and scope of the disclosed concept, and that such modifications, alterations, and combinations are to be viewed as being within the ambit of the inventive concept. As but one example in these regards, the described push registration can be carried out at other times of choice. This might be on a regular, periodic basis (such as once a day, once a week, or some other duration of interest). These teachings will also accommodate, of course, facilitating such a push registration whenever it can be determined (directly or indirectly) that the communication device has just subscribed to a new pushed-content service.

## Claims

1. A apparatus (400) comprising:
a memory (402);
a network interface (403); and
a control circuit (401) operably coupled to the memory and the network interface, the control circuit being configured to:
accept (301) push registrations from each of a plurality of communication devices, each push registration including at least an address for receiving pushed content and a categorical identification of a push proxy gateway type to use when pushing the content to the communication device; and
store (302) the push registrations in the memory.

2. The apparatus of claim 1 wherein the categorical identification identifies whether the push proxy gateway type is to comprise an enterprise server or an Internet server.

3. The apparatus of claim 1 wherein the address for receiving pushed content at least comprises at least one of an email address and a device personal identification number.

4. The apparatus of claim 1 wherein the control circuit is configured to accept multiple push registrations, on an application-by-application basis, from a single one of the plurality of communication devices.

5. The apparatus of claim 4 wherein the control circuit is configured to accept multiple push registrations, on an application-by-application basis, from a single one of the plurality of communication devices such that the single one of the plurality of communication devices can utilize differing categories of push proxy gateways types depending upon the application that facilitates pushing the content.

6. The apparatus of claim 1 wherein the control circuit is further configured to:
receive content to push to a given one of the plurality of communication devices from a push application along with an address for the given one of the plurality of communication devices;
use the address for the given one of the plurality of communication devices to identify the push proxy gateway type that corresponds to the push application to thereby provide an identified push proxy gateway type; and
forward the content to push to the given one of the plurality of communication devices to a push proxy gateway of the identified push proxy gateway type to thereby facilitate pushing the content to the given one of the plurality of communication devices.

7. An apparatus (200) comprising:
a memory (202) having stored therein identifying information for the apparatus;
a network interface (203); and
a control circuit (201) operably coupled to the memory and the network interface, the control circuit being configured to:
detect (101) a predetermined event; and
in response to detecting the predetermined event, register (102) pushed-content service information with a server-side library (400).

8. The apparatus of claim 7 wherein the identifying information comprises, at least in part, at least one of an email address and a device personal identification number.

9. The apparatus of claim 7 wherein the pushed-content service information comprises, at least in part, a categorical identification of a push proxy gateway type to use when pushing content to the apparatus.

10. A method comprising:
detecting (101), by a control circuit (201), a predetermined event; and
in response to detecting the predetermined event and by the control circuit, registering (102) pushed-content service information with a server-side library (400).

11. The method of claim 10 wherein registering pushed-content service information with a server-side library comprises, at least in part, providing identifying information as pertains to the control circuit to the server-side library.

12. The method of claim 11 wherein the identifying information comprises, at least in part, at least one of an email address and a device personal identification number that pertains to the control circuit.

13. The method of claim 10 wherein the pushed-content service information comprises, at least in part, a categorical identification of a push proxy gateway type to use when pushing content to a communication device that includes the control circuit.

14. The method of either of claim 9 or 13 wherein the categorical identification of a push proxy gateway type to use when pushing content categorically identifies the push proxy gateway type to use when pushing content on an application-by-application basis.

15. The method of either of claim 7 or 10 wherein the predetermined event comprises, at least in part, a powering up event.
